# EUROPÄISCHE PATENTSCHRIFT

(11) **EP 3 564 006 B1**
(45) Veröffentlichungstag und Bekanntmachung des Hinweises auf die Patenterteilung: **14.10.2020**
(21) Anmeldenummer: 19171304.9
(22) Anmeldetag: 26.04.2019
(51) Int. Cl.: B29C 49/42, B29C 49/06, B29L 31/00

(54) **VORRICHTUNG ZUM TRANSPORT UND PRÜFEN VON VORFORMLINGEN**
DEVICE FOR TRANSPORTING AND TESTING OF PREFORMS
DISPOSITIF DE TRANSPORT ET DE VÉRIFICATION DE PRÉFORMES

(30) Priorität: 04.05.2018 DE 102018110803
(43) Veröffentlichungstag der Anmeldung: 06.11.2019
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: Fuhrmann, Gerd, 52066 Aachen (DE); Rick, Michael, 52064 Aachen (DE)
(74) Vertreter: Kohlmann, Kai

(56) Entgegenhaltungen:
- EP-A1- 2 112 502
- DE-A1- 19 821 105
- US-A1- 2012 007 289
- US-A1- 2016 001 328

## Beschreibung

Die Erfindung betrifft eine Vorrichtung zum vereinzelten Transport und Prüfen mindestens eines Prüfkriteriums von Vorformlingen während des Transports in einer Transportrichtung gemäß dem Oberbegriff des Anspruchs 1.

Insbesondere betrifft die Erfindung eine Vorrichtung und ein Verfahren zur Massenprüfung von geometrisch übereinstimmenden Vorformlingen, sogenannten Preforms, zur Herstellung von Getränkeflaschen aus Polyethylenterephthalat (PET).

Bei der Herstellung von Behältern aus Kunststoff, insbesondere von Getränkeflaschen, werden zunächst Vorformlinge einschließlich ihres Verschlussgewindes im Spritzguss hergestellt. Anschließend werden die Vorformlinge zu fertigen Behältern weiterverarbeitet. Der Vorformling wird hierzu erwärmt, in ein Formwerkzeug eingespannt, auf die endgültige Länge gestreckt und anschließend mit Druckluft in die endgültige Form gebracht. Nach dem Abkühlen wird das Formwerkzeug geöffnet und der fertige Behälter ausgeworfen.

Fehlerhafte Vorformlinge verursachen Produktionsausfälle sowie zusätzliche Material-, Energie- und Herstellungskosten. Es wird daher angestrebt, dass die zur Behälterherstellung verwendeten Vorformlinge nahezu fehlerfrei sind. Typische Fehler sind Dimensionsfehler, Materialfehlstellen sowie Farbfehler. Dimensionsfehler können sich auf die Länge, Form und den Durchmesser der Vorformlinge beziehen. Materialfehlstellen können sich beispielsweise aus einer fehlerhafte Länge des Anspritzpunktes, unvollständig geschmolzenem Material, Blasen, Ölspritzern sowie Verunreinigungen ergeben. Farbfehler umfassen Farb- und Intensitätsabweichungen sowie fehlerhafte Mengen an UV-Blockern.

Aus dem Stand der Technik sind Vorrichtungen und Verfahren zur Prüfung und Aussortierung von Vorformlingen bekannt, die die Vorformlinge im kontinuierlichen Durchlauf auf mechanische und optische Fehler überprüfen und fehlerhafte Vorformlinge aussortieren.

Aus der EP 3 263 235 A1 ist ein Verfahren und eine gattungsgemäße Vorrichtung zum Transport und zur Untersuchung von schnelllaufenden Behandlungsgütern bekannt, die eine Untersuchungseinheit und eine Aussonderungsvorrichtung aufweist. Bei den Behandlungsgütern handelt es sich beispielsweise um Preforms für Blasformverfahren oder andere zylindrische, einseitig geschlossene Hohlkörper. Die Untersuchungseinheit, weist mindestens eine Kontrollkamera, eine mit dieser verbundene Steuereinheit sowie einen Klemmförderer auf. Der Klemmförderer verfügt über zwei, um je ein Antriebsrad und ein weiteres Rad umlaufende vorgespannte Bänder, die zwischen sich einen Förderweg definieren und die vereinzelten, sich nicht berührenden Hohlkörper in übereinstimmender Orientierung an der mindestens einen Kontrollkamera entlang des Transportwegs vorbei transportieren. Die Kontrollkamera blickt von oben auf die Stirnseite jedes Hohlkörpers und ist mit der Steuereinheit verbunden. Die Steuereinheit erhält Daten der Kontrollkamera, nämlich die Bilddaten der einzelnen Hohlkörper und vergleicht diese mit Sollwerten. Am Ende des Transportweges der Untersuchungseinheit ist die Aussonderungsvorrichtung so angeordnet, dass sie auf die Hohlkörper einwirken kann, die die Untersuchungseinheit verlassen haben. Die Aussonderungsvorrichtung wirft die Hohlkörper annähernd im freien Wurf aus, wobei die Aussonderungsvorrichtung die Flugbahnen von als fehlerhaft erkannten Hohlkörpern und von als fehlerfrei erkannten Hohlkörpern relativ zueinander mittels einer berührungslosen Kraftausübung ändert. Die Aussonderungsvorrichtung weist zu diesem Zweck eine ventilgesteuerte Düse auf, deren Düsenöffnung auf die Flugbahn der Hohlkörper gerichtet ist. Hat die Steuereinheit anhand der Bilddaten der Kontrollkamera einen Hohlkörper als fehlerbehaftet erkannt, schickt sie ein Steuersignal an das Ventil und öffnet die Düse zu einem Zeitpunkt, der so gewählt ist, dass ein aus der Düse austretender Druckluftstoß auf den Hohlkörper trifft, wenn dieser den Wirkbereich der Düse der Aussonderungsvorrichtung eintritt. Die Flugbahn eines fehlerbehafteten Hohlkörpers unterscheidet sich damit von der Flugbahn eines als fehlerfrei erkannten Hohlkörpers, sodass fehlerfreie von fehlerbehafteten Körpern getrennt werden können.

Ein Nachteil der bekannten Vorrichtung besteht darin, dass die Instabilität der Hohlkörper während des Fluges zu Fehlsortierungen führen können. Die Trennung der fehlerbehafteten von den fehlerfreien Hohlkörper durch eine Veränderung ihrer Flugbahn hat darüber hinaus zur Folge, dass die bei Zufuhr der Hohlkörper zu der Untersuchungseinheit übereinstimmende Orientierung der Hohlkörper und die Informationen über deren sequentielle Ordnung vollständig verloren gehen. Eine automatisierte Weiterverarbeitung der sortierten Hohlkörper ist daher mit hohem Aufwand verbunden. Schließlich ist die bekannte Vorrichtung lediglich zur Trennung von fehlerbehafteten und fehlerfreien Hohlkörpern geeignet.

Die EP 2 112 502 A1 offenbart ein weiteres Verfahren und eine Vorrichtung zur Prüfung und Aussortierung von Preforms, wobei die Preforms im Durchlauf auf mechanische und optische Defekte überprüft und defekte Preforms ausgeschieden werden. Die Vorrichtung umfasst einen Behälter für angelieferte Preforms, eine Greifeinrichtung zur Aufnahme von Preforms aus dem Behälter und deren Ausrichtung mit der Mündung nach oben, einen Riemenförderer zur Stabilisierung der Preforms und eine optische Untersuchungseinheit mit einer Vorrichtung zur Aussonderung unbrauchbarer Preforms. Die optische Untersuchnungseinheit weist eine Vakuumfördereinrichtung mit einem rückseitig mit Vakuum beaufschlagten perforierten Vakuumförderband sowie verschiedene Kameras und eine Bildverarbeitung auf. Die Aussonderungsvorrichtung hebt das Haltevakuum der als fehlerhaft erkannten Preforms auf. Ferner weist die Vorrichtung einen Behälter für unbrauchbare Preforms und einem Behälter für geprüfte und als einwandfrei befundene Preforms auf. Der Riemenförderer übergibt die in senkrechter Lage stabilisierten Preforms nacheinander an die Vakuumfördereinrichtung der optischen Untersuchnungseinheit, welche die Preforms an ihrer Mündung und ausschließlich durch Vakuum gehalten transportiert. Die optische Untersuchnungseinheit weist drei Kameras auf, welche jeweils in einem Winkel von 120° in der Bildebene versetzt angeordnet sind und eine Kamera, die jeden Preform von unten aufnimmt. Die Kameras der optischen Untersuchnungseinheit ermöglichen eine vollständige Abbildung der äußeren Oberfläche der Preforms, nicht jedoch des an dem Vakuumförderband anliegenden Mündungsbereichs. Zudem geht auch in dieser Prüfvorrichtung die Information über die sequentielle Ordnung der geprüften und als einwandfrei befundenen Preforms verloren.

Ausgehend von der EP 3 263 235 A1 als nächstliegendem Stand der Technik liegt der Erfindung die Aufgabe zugrunde, eine gattungsgemäße Vorrichtung zu schaffen, bei der Fehlsortierungen vermieden werden und die Orientierung von Preforms mit bestimmten detektierten Prüfkriterien sowie deren sequentielle Ordnung beibehalten wird. In einer vorteilhaften Ausgestaltung der Erfindung soll mit der Vorrichtung eine Trennung der Vorformlinge nach mehr als zwei Prüfungskriterien ermöglicht werden.

Diese Aufgabe wird durch eine Vorrichtung mit den Merkmalen des Anspruchs 1 gelöst.

Die Nutzung eines Klemmförderbandes in der Untersuchungseinheit gewährleistet, dass die für die Prüfung relevanten Bereiche jedes Vorformlings nicht durch Komponenten des Förderers verdeckt werden. Insbesondere erlaubt die Nutzung des Klemmförderbandes in der Untersuchungseinheit eine Anordnung von Digitalkameras, welche nicht nur eine vorzugsweise vollständige Abbildung der äußeren Oberfläche der Preforms, sondern auch des Mündungsbereichs ermöglichen. Des Weiteren wird durch den Klemmförderer, der die Vorformlinge mündungsnah einklemmt, ein für die Aufnahmen der Bilder ungünstiges Schwingen weitgehend ausgeschlossen.

Die Aussonderungsvorrichtung weist erfindungsgemäß ein Vakuumförderband auf, das die Preforms mit ihrer Mündung an dem Vakuumförderband durch den herrschenden Unterdruck hält. Die Preforms halten daher auch in der Aussonderungsvorrichtung die vorgegebene Orientierung und Lage bei. Um die Preforms ohne Änderung der Lage und Orientierung kontrolliert an die Aussonderungsvorrichtung zu übergeben, ist in Transportrichtung ein Anfangsabschnitt des Vakuumförderbandes oberhalb eines Endabschnitts des Klemmförderers in einem Abstand angeordnet, dass die nach oben weisenden Mündungen jedes Preforms an dem Vakuumförderband in dem Überlappungsbereich der beiden Förderer zur Anlage gelangen. Die durch den Klemmförderer und das Vakuumförderband definierten Transportebenen sind parallel zueinander. Sämtliche Mündungen der in gleicher Lage und Orientierung von dem Klemmförderer geförderten Preforms liegen in geringem Abstand unter der durch das Vakuumförderband definierten Transportebene, so dass die Preforms von dem herrschenden Unterdruck angesaugt und von dem Vakuumförderband übernommen werden.

Die Aussonderungsvorrichtung verfügt außerdem über mindestens eine von einer Steuerung aktivierbare Ablöseeinrichtung, die zum Ablösen einzelner Preforms von dem Vakuumförderband eingerichtet ist. Werden von der Datenverarbeitungseinheit abhängig von der Auswertung der das mindestens eine Prüfkriterium repräsentierenden Bildinformationen beispielsweise einzelne Preforms als fehlerhaft erkannt, wird die Steuerung der Ablöseeinrichtung aktiviert und löst gezielt den fehlerhaften Vorformling von dem Vakuumförderband ab. Die fehlerfreien Vorformlinge werden indes unter Beibehaltung ihrer Orientierung und sequentiellen Ordnung durch das Vakuumförderband weiter transportiert. In Transportrichtung hinter der Aussonderungsvorrichtung ist eine Auslauftransporteinrichtung angeordnet, die die von der Aussonderungsvorrichtung stammenden Vorformlinge übernimmt, beispielsweise die als fehlerfrei erkannten Vorformlinge. Die Auslauftransportvorrichtung weist hierzu zwei in parallelem Abstand angeordnete Führungsschienen auf, wobei in Transportrichtung ein Anfangsabschnitt der Auslauftransporteinrichtung unterhalb eines Endabschnitts des Vakuumförderbandes angeordnet ist, sodass der Tragring jedes Vorformlings spätestens mit dem Ablösen des Vorformlings am Ende des Vakuumförderbandes auf den Führungsschienen zur Anlage gelangt. Auf einen Antrieb für den Weitertransport der mit dem Tragring auf den Führungsschienen aufliegenden Vorformling kann verzichtet werden, wenn die Führungsschienen ausgehend von dem Endabschnitt des Vakuumbandes nach unten geneigt sind, um den Weitertransport der Vorformlinge aufgrund der Schwerkraft zu bewirken. Alternativ kann jedoch auch ein gesonderter Antrieb zum Weitertransport der in den Führungsschienen befindlichen Vorformlinge vorgesehen sein, beispielsweise ein Druckluftantrieb.

Erfindungsgemäß behalten die der Auslauftransporteinrichtung zugeführten Vorformlinge ihre Orientierung und Lage sowie sequentielle Ordnung bei und können daher mit geringem Aufwand einer automatischen Weiterverarbeitung zugeführt werden, ohne dass eine erneute Ausrichtung erforderlich ist. Die Erfindung beruht insoweit auf der Erkenntnis, dass eine Fortsetzung der in der Untersuchnungseinheit formschlüssigen seitlichen Führung der Preforms mittels der Klemmförderbänder in der Auslauftransportvorrichtung mittels der Führungsschienen möglich ist, obwohl in der dazwischen angeordneten Aussonderungsvorrichtung zeitweilig die formschlüssige seitliche Führung der Preforms aufgegeben wird. Überraschend hat sich gezeigt, dass die zeitweilige Aufhebung der formschlüssigen seitlichen Führung der an dem Vakuumförderband hängenden Preforms in der Aussonderungsvorrichtung nicht zu Problemen beim Einlauf in die Auslauftransportvorrichtung führt, wie beispielsweise ein Ablösen von als einwandfrei befundenen Preforms beim Einlauf in die Führungsschienen und/oder ein unvollständiges Einsortieren. Mit der Sequenz aus Riemenbandförderer mit formschlüssiger seitlicher Führung, Vakuumbandförderer ausschließlich mit Reibschluss und Führungsschienentransport mit formschlüssiger seitlicher Führung kann die Orientierung von Preforms mit bestimmten detektierten Prüfkriterien sowie deren sequentielle Ordnung in der Transport- und Prüfvorrichtung beibehalten und zugleich eine vollständige Abbildung jedes Preforms einschließlich des Mündungsbereichs in der Untersuchungseinheit gewährleistet werden .

Vorzugsweise weist die Auslauftransportvorrichtung in dem Anfangsabschnitt in Richtung der im parallelen Abstand angeordneten Führungsschienen aufeinander zulaufende Führungen auf, die den störungsfreien Einlauf der Vorformlinge zwischen den Führungsschienen unterstützen. Die Führungen können als Verlängerungen der Führungsschienen ausgeführt sein.

Das Vakuumförderband, auch als Überkopfförderer bezeichnet, umfasst üblicherweise mindestens ein umlaufendes Förderband mit gummielastischer Oberfläche die entlang einer Mittellinie perforiert ist. Auf der Rückseite des perforierten Förderbandes liegt ein partielles Vakuum an, welches jeden Vorformling nach unten hängend hält und in Transportrichtung weiter bewegt. Alternativ weist das Vakuumförderband zwei parallel zu einander verlaufende Bänder auf, wobei der Abstand zwischen den Bändern derart bestimmt ist, dass die Mündung jedes zu prüfenden Preforms teilweise an dem einen und teilweise an dem anderen der beiden Bänder anliegt. Eine sich in Transportrichtung erstreckende Unterdruckerzeugungseinrichtung zur Erzeugung des partiellen Vakuums wird durch den Zwischenraum zwischen den beabstandeten Bändern in den Vorformlingen zur Wirkung gebracht.

In einer vorteilhaften Ausgestaltung der Erfindung weist die Aussonderungsvorrichtung mindestens zwei unabhängig voneinander aktivierbare Ablöseeinrichtungen auf, die entlang des Transportweges des Vakuumförderers an unterschiedlichen Positionen angeordnet sind. Die Datenverarbeitungseinheit ist in diesem Fall derart eingerichtet, dass Steuerungsbefehle für die mehreren Ablöseeinrichtungen abhängig von einer Auswertung von unterschiedlichen Prüfkriterien erzeugt werden. Die erfindungsgemäße Vorrichtung ist damit in der Lage, nicht nur fehlerhafte von fehlerfreien Vorformlingen zu unterscheiden, sondern Vorformlinge abhängig von Bildinformationen, die unterschiedliche Fehler und/oder Eigenschaften des Preforms repräsentieren, an unterschiedlichen Positionen des Vakuumförderbands gezielt von dem Band abzulösen. An der in Transportrichtung ersten Ablöseeinrichtung können beispielsweise sämtliche fehlerhaften Vorformlinge von dem Vakuumbandförderer gelöst und abgeworfen werden. An einer in Transportrichtung nachfolgenden Ablöseeinrichtung können sodann fehlerfreie Vorformlinge mit einer bestimmten Oberflächenbeschaffenheit oder Rückstellmuster von dem Vakuumbandförderer abgelöst und abgeworfen werden, während alle weiteren, fehlerfreien Vorformlinge unter Beibehaltung ihrer Lage und Orientierung sowie sequentiellen Ordnung in die Auslauftransporteinrichtung gelangen.

Um unterschiedliche Prüfkriterien zu erfassen weist die Untersuchungseinheit in vorteilhafter Ausgestaltung der Erfindung mehrere Digitalkameras auf. Mindestens eine Digitalkamera ist vorzugsweise derart ausgerichtet, dass die Mündung jedes Vorformlings in deren Sichtfeld gelangt, während mindestens eine weitere Digitalkamera derart ausgerichtet ist, dass die Mantelfläche jedes Vorformlings in deren Sichtfeld gelangt. Die von oben auf die Mündung schauende Digitalkamera dient beispielsweise zur Untersuchung des Durchmessers des Vorformlings, während die auf die Seite jedes Vorformlings blickende Digitalkamera Fehler beziehungsweise eine Oberflächenbeschaffenheit der Mantelfläche abbildet.

Die Datenverarbeitungseinheit erzeugt die Steuerungsbefehle abhängig von einer Auswertung der das mindestens eine Prüfkriterium repräsentierenden Bildinformationen. Der Steuerungsbefehl wird von der Datenverarbeitungseinheit an die Steuerung der mindestens einen Ablöseeinrichtung der Aussonderungsvorrichtung übertragen. Da die Vorformlinge zwischen dem Zeitpunkt der Aufnahme und der gegebenenfalls erforderlichen Ablösung von dem Vakuumförderband einen Transportweg zurücklegen, muss die Datenverarbeitungseinheit den Zeitpunkt zur Aktivierung der Ablöseeinrichtung unter Berücksichtigung des Transportwegs, der Reaktionszeit der Ablöseeinrichtung und der Transportgeschwindigkeit ermitteln. Um diese Ermittlung zu vereinfachen transportieren das Klemmförderband und das übernehmende Vakuumförderband die Vorformlinge vorzugsweise mit übereinstimmender und konstanter Geschwindigkeit.

Zur gezielten Aussonderung von Vorformlingen an jeder Ablöseeinrichtung ist außerdem an dem Klemmförderband ein Positionsverfolgungssystem angeordnet, um die Position jedes Preforms in Bezug zu jeder Digitalkamera und jeder Ablöseeinrichtung zu bestimmen. Das Positionsverfolgungssystem weist vorzugsweise einen Triggersensor auf. Der Triggersensor, beispielsweise eine Lichtschranke löst die Aufnahme eines Bildes oder einer Bildserie jedes Preforms zu einem definierten Zeitpunkt aus. Der Zeitpunkt wird derart gewählt, dass die das Prüfkriterium repräsentierenden Bereiche des Vorformlings im Sichtbereich der Digitalkamera liegen. Durch Beibehaltung einer konstanten Transportgeschwindigkeit ist gewährleistet, dass die zu prüfenden Vorformlinge synchron im richtigen Moment in dem Bild erfasst werden. Zusätzlich kann das Positionsverfolgungssystem einen Wegsensor aufweisen, der die Position des Vorformlings nach einer getriggerten Aufnahme in Bezug zu dem Trigger-Sensor erfasst.

Um die Vorformlinge berührungslos, verschleißarm und ohne das Risiko von Beschädigungen von dem Vakuumband abzulösen umfasst die Ablöseeinrichtung vorzugsweise eine zeitweilig mittels eines Gases beaufschlagbare Düse, deren Gasstrahl in oder auf den abzulösenden Vorformling ausgerichtet ist. Die zeitweilige Beaufschlagung erfolgt vorzugsweise mittels elektrisch ansteuerbarer Ventile. Vorzugsweise trifft der Gasstrahl der Ablöseeinrichtung in einem etwa rechten Winkel zur Längsachse des Vorformlings auf dessen Mantelfläche. Grundsätzlich kann die Ablösung auch mittels eines mechanischen Ausstoßers erfolgen, sofern aufgrund der Materialeigenschaften des Vorformlings eine Beschädigung von dessen Oberfläche durch den Ausstoßer nicht zu befürchten ist.

Nachfolgend wird die Erfindung anhand der Figuren näher erläutert. Es zeigen
- **Figur 1**: eine perspektivische schematische Ansicht einer erfindungsgemäßen Vorrichtung,
- **Figur 2a**: eine schematische Unteransicht sowie
- **Figur 2b**: eine schematische Seitenansicht der Vorrichtung nach Figur 1.

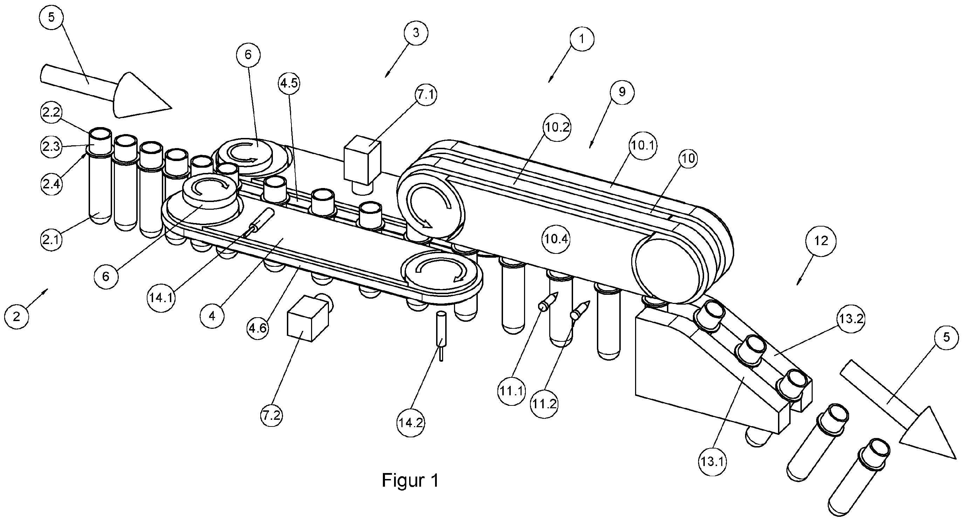

Figur 1 zeigt eine Vorrichtung (1) zum vereinzelten Transport und Prüfen von Vorformlingen (2), nachfolgend auch als Preforms bezeichnet. Jeder Preform (2) weist eine Mantelfläche (2.1), eine stirnseitige Mündung (2.2), ein Verschlussgewinde (2.3) sowie einen Tragring (2.4) auf.

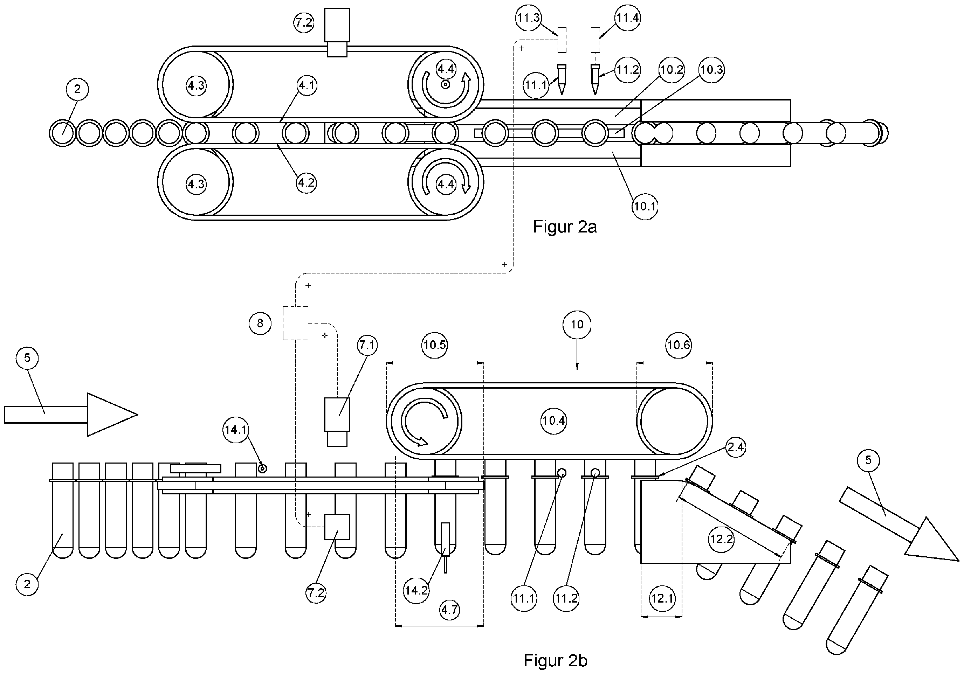

Die Vorformlinge werden mittels einer in Figur 1 nicht dargestellten Zuführeinrichtung einer Untersuchungseinheit (3) zugeführt. Die Untersuchungseinheit umfasst einen Klemmförderer mit parallel gegenüberliegenden Abschnitten (4.1, 4.2) von jeweils um zwei Räder (4.3, 4.4) umlaufenden Klemmförderbändern (4.5, 4.6). Die Räder (4.4) sind jeweils mit einem nicht dargestellten Antrieb verbunden (vgl. Figur 2a) .

Der Abstand zwischen den parallelen Abschnitten (4.1, 4.2) der Klemmförderbänder ist derart bestimmt, dass die Vorformlinge (2) an der Mantelfläche (2.1) direkt unterhalb des Tragrings (2.4) seitlich zwischen den Klemmförderbändern (4.5, 4.6) eingeklemmt und in Transportrichtung (5) von einer Eingangs angeordneten Vereinzelungsvorrichtung (6) in Richtung eines Endabschnittes (4.7) des Klemmförderers (4) transportiert werden (vgl. Figur 2b). Die Vereinzelungseinrichtung (6) bewirkt, dass die Vorformlinge (2) in gleichmäßigem Abstand, ohne sich an der Mantelfläche (2.1) zu berühren in Transportrichtung (5) mittels des Klemmförderers (4) transportiert werden. Der auf den umlaufene Bändern (4.5, 4.6) aufliegende Tragring (2.4) jedes Preforms (2) bewirkt, dass sämtliche in gleicher Orientierung zugeführten Preforms eine übereinstimmende Lage aufweisen. Während des Transportes der Vorformlinge (2) in Transportrichtung (5) mittels des Klemmförderers (4) gelangen die Vorformlinge (2) vereinzelt nacheinander in den Sichtbereich einer ersten und zweiten Digitalkamera (7.1, 7.2). Digitalkamera (7.1) blickt von oben auf die Mündung (2.2) und den Tragring (2.4) jedes Vorformlings (2) und Digitalkamera (7.2) von der Seite auf die Mantelfläche (2.1). Die von der Digitalkamera (7.1) aufgenommenen Bilder enthalten ein erstes Prüfkriterium repräsentierende Bildinformationen, wie beispielsweise den Durchmesser der Mündung. Die von der zweiten Digitalkamera (7.2) aufgenommenen Bilder enthalten ein zweites Prüfkriterium repräsentierenden Bildinformationen, beispielsweise Informationen zur Oberflächenbeschaffenheit der Mantelfläche. Beide Digitalkameras (7.1, 7.2) sind mit einer Datenverarbeitungseinheit (8) verbunden, die abhängig von einer Auswertung der die beiden Prüfkriterien repräsentierenden Bildinformationen Steuerungsbefehle erzeugt.

In Transportrichtung (5) hinter der Untersuchungseinheit (4) ist eine Aussonderungsvorrichtung (9) angeordnet, die die von der Untersuchungseinheit (3) stammenden Vorformlinge (2) übernimmt. Die Aussonderungsvorrichtung (9) weist ein doppelspuriges Vakuumförderband (10) auf, das die Vorformlinge (2) mit ihrer Mündung (2.2) an den beiden parallel zueinander laufenden Bändern (10.1, 10.2) des Vakuumförderbandes (10) durch den herrschenden Unterdruck hält. Der Abstand zwischen den Bändern (10.1, 10.2) des Vakuumförderbandes (10) ist derart bestimmt, dass die Mündung (2.2) jedes Vorformlings (2) teilweise an dem einen und teilweise an dem anderen der beiden Bänder (10.1, 10.2) anliegt, wie dies insbesondere aus Figur 2a erkennbar ist.

Zwischen dem Ober- und Untertrum der umlaufenden Bänder (10.1, 10.2) des Vakuumförderbandes (10) ist eine Unterdruckerzeugungseinrichtung (10.4) mit einer Ansaugöffnung (10.3) zur Erzeugung eines partiellen Vakuums angeordnet, das über die Ansaugöffnung (10.3) in den Vorformlingen (2) zur Wirkung gebracht wird. Die Ansaugöffnung (10.3) mündet in dem Zwischenraum zwischen den beabstandeten Bändern (10.1, 10.2). Die ebene Oberfläche der Unterdruckerzeugungseinrichtung (10.4) zu beiden Seiten der Ansaugöffnung (10.3) bildet zugleich die Auflage für die umlaufenden Bänder (10.2, 10.2) des Vakuumförderbandes (10).

Unterhalb des Untertrums des Vakuumförderbandes sind in Transportrichtung (5) versetzt zueinander zwei Ablöseeinrichtungen (11.1, 11.2) angeordnet. Jede Ablöseeinrichtung (11.1, 11.2) ist über eine Steuerung (11.3, 11.4) einzeln aktivierbar. Handelt es sich bei den Ablöseeinrichtungen (11.1, 11.2) beispielsweise um zeitweilig mittels Druckluft beaufschlagbare Düsen, können die Steuerungen(11.3, 11.4) als elektrisch ansteuerbare Ventile für die Druckluft ausgestaltet sein. Die Steuerungen (11.3, 11.4) sind mit der Datenverarbeitungseinheit (8) verbunden, die die Ablöseeinrichtungen (11.1, 11.2) abhängig von den Steuerungsbefehlen aktiviert.

Aus der Seitenansicht nach Figur 2b ist erkennbar, dass ein Anfangsabschnitt (10.5) des Vakuumförderbandes (10) oberhalb des Endabschnittes (4.7) des Klemmförderers (4) in einem vertikalen Abstand angeordnet ist, der derart bemessen ist, dass die nach oben weisenden Mündungen (2.2) jedes Vorformlings (2) in dem Endabschnitt (4.7) an dem Anfangsabschnitt (10.5) des Vakuumförderbandes (10) zur Anlage gelangen. Hierbei vollzieht jeder Vorformling (2) in vertikaler Richtung lediglich eine geringfügige und übereinstimmende Lageänderung durch den zur Wirkung gelangenden Unterdruck im Bereich des Vakuumbandförderers (10) .

In Transportrichtung (5) hinter der Aussonderungsvorrichtung (9) ist eine Auslauftransporteinrichtung (12) angeordnet, die von der Aussonderungsvorrichtung (9) stammende Vorformlinge (2), soweit sie nicht zuvor mittels der Ablöseeinrichtungen (11.1, 11.2) von dem Vakuumbandförderer (10) abgelöst wurden, übernimmt. Die Auslauftransportvorrichtung (12) weist zwei in parallelem Abstand nebeneinander angeordnete Führungsschienen (13.1, 13.2) auf, wobei ein Anfangsabschnitt (12.1) der Auslauftransporteinrichtung (12) unterhalb eines Endabschnittes (10.6) des Vakuumförderbandes (10) angeordnet ist, sodass der Tragring (2.4) jedes Vorformlings (2) auf den parallelen Führungsschienen (13.1, 13.2) zur Anlage gelangt. An den Anfangsabschnitt (12.1) schließt sich ein nach unten geneigter Abschnitt (12.2) der Führungsschienen (13.1, 13.2) an, der in den Zeichnungen nur schematisch und nicht in voller Länge dargestellt ist. Aufgrund der Hangabtriebskräfte gleiten die an die Auslauftransporteinrichtung (12) übergebenen Vorformlinge (2) in Transportrichtung (5) weiter und können einem nachgelagerten Verarbeitungsprozess unmittelbar zugeführt werden, ohne dass sich deren Orientierung und sequentielle Ordnung aufgrund des Prüf- und Aussortiervorgangs in der erfindungsgemäßen Vorrichtung (1) zum Transport und Prüfen der Vorformlinge geändert hat.

Zur gezielten Aussonderung von Vorformlingen an jeder Ablöseeinrichtung ist außerdem an dem Klemmförderer (4) ein Positionsverfolgungssystem (14) angeordnet, um die Position jedes Preforms (2) in Bezug zu den Digitalkameras (7.1, 7.2) und den Ablöseeinrichtungen (11.1, 11.2) zu bestimmen. Das Positionsverfolgungssystem weist einen Triggersensor (14.1) auf. Der Triggersensor (14.1), beispielsweise eine durch jeden Preform (2) unterbrechbare Lichtschranke, löst die Aufnahme eines Bildes jedes Preforms (2) zu einem Zeitpunkt aus, wenn sich der Preform (2) im Sichtbereich der beiden Digitalkameras (7.1, 7.2) befindet. Zusätzlich weist das Positionsverfolgungssystem (14) einen Wegsensor (14.2) auf, der die Position des Preforms (2) nach einer getriggerten Aufnahme in Bezug zu dem Trigger-Sensor (14.1) erfasst.

| Nr. | **Bezeichnung** |
|---|---|
| 1. | Vorrichtung |
| 2. | Vorformling (Preform) |
| 2.1 | Mantelfläche |
| 2.2 | Mündung |
| 2.3 | Verschlussgewinde |
| 2.4 | Tragring |
| 3. | Untersuchungseinheit |
| 4 . | Klemmförderer |
| 4.1 | Parallele Abschnitte |
| 4.2 | Parallele Abschnitte |
| 4.3 | Räder |
| 4.4 | Räder |
| 4.5 | Klemmförderbänder |
| 4.6 | Klemmförderbänder |
| 4.7 | Endabschnitt |
| 5. | Transportrichtung |
| 6. | Vereinzelungsvorrichtung |
| 7.1 | Digitalkamera |
| 7.2 | Digitalkamera |
| 8 . | Datenverarbeitungseinheit |
| 9. | Aussonderungsvorrichtung |
| 10. | Vakuumförderband |
| 10.1 | Band |
| 10.2 | Band |
| 10.3 | Ansaugöffnung |
| 10.4 | Unterdruckerzeugungseinrichtung |
| 10.5 | Anfangsabschnitt |
| 10.6 | Endabschnitt |
| 11.1 | Ablöseeinrichtung |
| 11.2 | Ablöseeinrichtung |
| 11.3 | Steuerung |
| 11.4 | Steuerung |
| 12 | Auslauftransporteinrichtung |
| 12.1 | Anfangsabschnitt |
| 12.2 | Geneigter Abschnitt |
| 13.1 | Führungsschiene |
| 13.2 | Führungsschiene |
| 14. | Positionsverfolgungssystem |
| 14.1 | Triggersensor |
| 14.2 | Wegsensor |

## Patentansprüche

1. Vorrichtung (1) zum vereinzelten Transport und Prüfen mindestens eines Prüfkriteriums von Vorformlingen (2) während des Transports in einer Transportrichtung (5), umfassend
- eine Untersuchungseinheit (3), die mindestens eine Digitalkamera (7.1, 7.2), eine mit jeder Digitalkamera (7.1, 7.2) verbundene Datenverarbeitungseinheit (8) sowie einen Klemmförderer (4) aufweist, wobei
- die mindestens eine Digitalkamera (7.1, 7.2) derart ausgerichtet ist, dass ein zu prüfender Vorformling (2) während des Transports mittels des Klemmförderers (4) ganz oder teilweise in deren Sichtfeld gelangt und jedes von der Digitalkamera (7.1, /.2) aufgenommene Bild das mindestens eine Prüfkriterium repräsentierende Bildinformationen enthält,
- die Datenverarbeitungseinheit (8) eingerichtet ist, um abhängig von einer Auswertung der das mindestens eine Prüfkriterium repräsentierenden Bildinformationen Steuerungsbefehle zu erzeugen,
- parallel gegenüberliegende Abschnitte (4.1, 4.2) von angetriebenen Klemmförderbändern (4.5, 4.6) des Klemmförderers (4) die Vorformlinge (2) mit der Mündung (2.2) nach oben weisend und in übereinstimmender Lage seitlich einklemmen,
- eine Aussonderungsvorrichtung (9), die in Transportrichtung (5) hinter der Untersuchungseinheit (3) angeordnet ist und die von der Untersuchungseinheit (3) stammenden Vorformlinge (2) übernimmt,
**dadurch gekennzeichnet, dass**
- die Vorformlinge (2) eine Mantelfläche (2.1), eine stirnseitige Mündung (2.2), ein Verschlussgewinde (2.3) sowie einen Tragring (2.4) aufweisen,
- die Aussonderungsvorrichtung (9) ein Vakuumförderband (10) aufweist, eingerichtet um die Vorformlinge (2) mit ihrer Mündung (2.2) an dem Vakuumförderband (10) durch den herrschenden Unterdruck zu halten, wobei in Transportrichtung (5) ein Anfangsabschnitt (10.5) des Vakuumförderbandes (10) oberhalb eines Endabschnitts (4.7) des Klemmförderers (4) in einem Abstand angeordnet ist, so dass die nach oben weisenden Mündungen (2.2) jedes Vorformlings (2) an dem Vakuumförderband (10) zur Anlage gelangen,
- die Aussonderungsvorrichtung (9) mindestens eine von einer Steuerung (11.3, 11.4) aktivierbare Ablöseeinrichtung (11.1, 11.2) aufweist, die zum Ablösen einzelner Vorformlinge (2) von dem Vakuumförderband (10) eingerichtet ist, wobei jede Steuerung (11.3, 11.4) mit der Datenverarbeitungseinheit (8) verbunden ist und die Ablöseeinrichtung (11.1, 11.2) abhängig von den Steuerungsbefehlen der Datenverarbeitungseinheit (8) aktiviert und
- in Transportrichtung (5) hinter der Aussonderungsvorrichtung (9) eine Auslauftransporteinrichtung (12) angeordnet ist, die die von der Aussonderungsvorrichtung (9) stammenden Vorformlinge übernimmt, wobei
- die Auslauftransporteinrichtung (12) zwei in parallelem Anstand angeordnete Führungsschienen (13.1, 13.2) aufweist und
- in Transportrichtung (5) ein Anfangsabschnitt(12.1) der Auslauftransporteinrichtung (12) unterhalb eines Endabschnitts (10.6) des Vakuumförderbands (10) angeordnet ist, so dass der Tragring (2.4) jedes Vorformlings (2) auf den Führungsschienen (13.1, 13.2) zur Anlage gelangt.

2. Vorrichtung nach Anspruch 1, **dadurch gekennzeichnet, dass** das Vakuumförderband (10) zwei parallel zueinander verlaufende umlaufende Bänder (10.1, 10.2) aufweist, wobei der Abstand zwischen den Bändern (10.1, 10.2) derart bestimmt ist, dass die Mündung (2.2) jedes Vorformlings (2) teilweise an dem einen und teilweise an dem anderen der beiden Bänder (10.1, 10.2) im Untertrum anliegt.

3. Vorrichtung nach Anspruch 1 oder 2, **dadurch gekennzeichnet, dass** die Aussonderungsvorrichtung (9) mindestens zwei unabhängig voneinander aktivierbare Ablöseeinrichtungen (11.1, 11.2) aufweist, die entlang des Transportwegs des Vakuumförderbandes (10) an unterschiedlichen Positionen angeordnet sind.

4. Vorrichtung nach Anspruch 3, **dadurch gekennzeichnet, dass** die Datenverarbeitungseinheit (8) derart eingerichet ist, Steuerungsbefehle für die mehreren Ablöseeinrichtungen (11.1, 11.2) abhängig von einer Auswertung von unterschiedlichen Prüfkriterien zu erzeugen.

5. Vorrichtung nach einem der Ansprüche 1 bis 4, **dadurch gekennzeichnet, dass** die mindestens eine Digitalkamera (7.1, 7.2) derart ausgerichtet ist, dass die Mündung (2.2) jedes Vorformlings (2) und/oder dessen Mantelfläche (2.1) in deren Sichtfeld gelangt.

6. Vorrichtung nach einem der Ansprüche 1 bis 5, **dadurch gekennzeichnet, dass** der Klemmförderer (4) und das Vakuumförderband (10) die Vorformlinge (2) mit übereinstimmender Geschwindigkeit transportieren.

7. Vorrichtung nach einem der Ansprüche 1 bis 6, **dadurch gekennzeichnet, dass** an dem Klemmförder (4) ein Positionsverfolgungssystem (14) angeordnet ist, eingerichet um die Position jedes Vorformlinge (2) in Bezug zu jeder Digitalkamera (7.1, 7.2) und jeder Ablöseeinrichtung (11.1, 11.2) zu bestimmen.

8. Vorrichtung nach Anspruch 7, **dadurch gekennzeichnet, dass** das Positionsverfolgungssystem (14) einen Triggersensor (14.1) für eine getriggerte Aufnahme des Bildes eines Vorformlings (2) mittels der mindestens einen Digitalkamera (7.1, 7.2) aufweist.

9. Vorrichtung nach Anspruch 7, **dadurch gekennzeichnet, dass** das Positionsverfolgungssystem (14) einen Wegsensor (14.2) aufweist.

10. Vorrichtung nach einem der Ansprüche 1 bis 9, **dadurch gekennzeichnet, dass** jede Ablöseeinrichtung (11.1, 11.2) eine zeitweilig mittels eines Gases beaufschlagbare Düse umfasst, deren Gasstrahl in oder auf einen abzulösenden Vorformling (2) ausgerichtet ist.

11. Vorrichtung nach einem der Ansprüche 1 bis 10, **dadurch gekennzeichnet, dass** die Auslauftransportvorrichtung (12) in dem Anfangsabschnitt (12.1) in Richtung der Führungsschienen (13.1, 13.2) aufeinander zulaufende Führungen aufweist.

## Claims

1. Device (1) for separated transport and testing of at least one test criterion of preforms (2) during transport in a transport direction (5), comprising
- an investigation unit (3) which comprises at least one digital camera (7.1, 7.2) a data processing unit (8) connected to each digital camera (7.1, 7.2) and a clamping conveyor (4), wherein
- the at least one digital camera (7.1, 7.2) is aligned in such a manner that during transport by means of the clamping conveyor (4) a preform (2) to be tested completely or partially enters into the field of view thereof and each image recorded by the digital camera (7.1, 7.2) contains the image information representing at least one test criterion,
- the data processing unit (8) is set up to produce control commands depending on an evaluation of the image information representing the at least one test criterion,
- parallel opposite sections (4.1, 4.2) of driven clamping conveyor belts (4.5, 4.6) of the clamping conveyor (4) laterally clamp the preforms (2) with the opening (2.2) pointing upwards and in matching position,
- a separating device (9) which is arranged downstream of the investigation unit (3) in the transport direction (5) and which receives the preforms (2) coming from the investigation unit (3),
**characterized in that**
- the preforms (2) have a lateral surface (2.1), a front-side opening (2.2), a closure thread (2.3) and a supporting ring (2.4),
- the separating device (9) comprises a vacuum conveyor belt (10), adapted to hold the preforms (2) with their opening (2.2) on the vacuum conveyor belt (10) due to the prevailing negative pressure, wherein in the transport direction (5) an initial section (10.5) of the vacuum conveyor belt (10) is arranged at a distance above an end section (4.7) of the clamping conveyor (4) so that the upwardly pointing openings (2.2) of each preform (2) come to abut against the vacuum conveyor belt (10),
- the separating device (9) comprises at least one release device (11.1, 11.2) which can be activated by a control (11.3, 11.4) which is adapted to release individual preforms (2) from the vacuum conveyor belt (10), wherein each control (11.3, 11.4) is connected to the data processing unit (8) and the release device (11.1, 11.2) is activated depending on the control commands of the data processing unit (8) and
- downstream of the separating device (9) in the transport direction (5) an outlet transport device (12) is arranged which receives the preforms coming from the separating device (9), wherein
- the outlet transport device (12) has two guide rails (13.1, 13.2) arranged at a parallel spacing and
- in the transport direction (5) an initial section (12.1) of the outlet transport device (12) is arranged underneath an end section (10.6) of the vacuum conveyor belt (10) so that the supporting ring (2.4) of each preform (2) comes to abut against the guide rails (13.1, 13.2).

2. Device according to Claim 1, **characterized in that** the vacuum conveyor belt (10) has two circumferential belts (10.1, 10.2) running parallel to one another, wherein the distance between the belts (10.1, 10.2) is determined in such a manner that the opening (2.2) of each preform (2) rests partially against the one and partially against the other one of the two belts (10.1, 10.2) in the lower run.

3. Device according to Claim 1 or 2, **characterized in that** the separating device (9) comprises at least two release devices (11.1, 11.2) which can be activated independently of one another which are arranged along the transport path of the vacuum conveyor belt (10) at different positions.

4. Device according to Claim 3, **characterized in that** the data processing unit (8) is set up in such a manner to produce control commands for the plurality of release devices (11.1, 11.2) depending on an evaluation of different test criteria.

5. Device according to one of Claims 1 to 4, **characterized in that** the at least one digital camera (7.1, 7.2) is aligned in such a manner that the opening (2.2) of each preform (2) and/or its lateral surface (2.1) comes into the field of view thereof.

6. Device according to one of Claims 1 to 5, **characterized in that** the clamping conveyor (4) and the vacuum conveyor belt (10) transport the preforms (2) at matching speed.

7. Device according to one of Claims 1 to 6, **characterized in that** a position tracking system (14) is arranged on the clamping conveyor (4), set up to determine the position of each preform (2) in relation to each digital camera (7.1, 7.2) and each release device (11.1, 11.2).

8. Device according to Claim 7, **characterized in that** the position tracking system (14) has a trigger sensor (14.1) for a triggered recording of the image of a preform (2) by means of the at least one digital camera (7.1, 7.2).

9. Device according to Claim 7, **characterized in that** the position tracking system (14) has a position sensor (14.2).

10. Device according to one of Claims 1 to 9, **characterized in that** each release device (11.1, 11.2) comprises a nozzle which can be temporarily acted upon by means of a gas, the gas jet of which is aligned into or onto a preform (2) to be released.

11. Device according to one of Claims 1 to 10, **characterized in that** the outlet transport device (12) has guides running towards one another in the initial section (12.1) in the direction of the guide rails (13.1, 13.2).

## Revendications

1. Dispositif (1), destiné au transport désolidarisé et à la vérification d'au moins un critère de vérification de préformes (2) pendant le transport dans une direction de transport (5), comprenant
- une unité d'analyse (3), qui comporte au moins une caméra numérique (7.1, 7.2), une unité de traitement de données (8) connectée sur chaque caméra numérique (7.1, 7.2), ainsi qu'un convoyeur par pincement (4),
- l'au moins une caméra numérique (7.1, 7.2) étant orientée de telle sorte que pendant le transport au moyen du convoyeur par pincement (4), une préforme (2) qui doit être vérifiée arrive totalement ou partiellement dans le champ de vision de celle-ci et que chaque image enregistrée par la caméra numérique (7.1, 7.2) contienne des informations d'images représentant l'au moins un critère de vérification,
- l'unité de traitement de données (8) étant aménagée pour générer des instructions de commande en fonction d'une évaluation des informations d'images représentant l'au moins un critère de vérification,
- des tronçons (4.1, 4.2) parallèlement opposés des bandes de convoyage par pincement (4.5, 4.6) entraînées du convoyeur par pincement (4) enserrant les préformes (2) avec leur embouchure (2.2) dirigée vers le haut et les enserrant latéralement en position coïncidente,
- un dispositif de triage (9), qui dans la direction de transport (5) est placé à l'arrière de l'unité d'analyse (3) et qui reprend les préformes (2) provenant de l'unité d'analyse (3),
**caractérisé en ce que**
- les préformes (2) comportent une surface d'embouchure (2.1), une embouchure (2.2) frontale, un filetage d'obturation (2.3) ainsi qu'une bague de support (2.4),
- le dispositif de triage (9) comporte une bande de convoyage sous vide (10), aménagée pour maintenir les préformes (2) par leur embouchure (2.2) sur la bande de convoyage sous vide (10) par la dépression régnante, dans la direction de transport (5), un tronçon de départ (10.5) de la bande de convoyage sous vide (10) étant placé avec un écart au-dessus d'un tronçon de fin (4.7) du convoyeur par pincement (4), de telle sorte que les embouchures (2.2) dirigées vers le haut de chaque préforme (2) arrivent en appui sur la bande de convoyage sous vide (10),
- le dispositif de triage (9) comporte au moins un dispositif de désolidarisation (11.1, 11.2) activable par un système de commande (11.3, 11.4), qui est aménagé pour désolidariser une à une des préformes (2) de la bande de convoyage sous vide (10), chaque système de commande (11.3, 11.4) étant connecté sur l'unité de traitement de données (8) et le dispositif de désolidarisation (11.1, 11.2) étant activé en fonction des instructions de commande de l'unité de traitement de données (8) et
- dans la direction de transport (5) étant placé derrière le dispositif de triage (9) un système de transport de sortie (12), qui reprend les préformes provenant du dispositif de triage (9),
- le système de transport de sortie (12) comportant deux rails de guidage (13.1, 13.2) placés à un écart parallèle et
- dans la direction de transport (5), un tronçon de départ (12.1) du système de transport de sortie (12) étant placé en-dessous d'un tronçon de fin (10.6) de la bande de convoyage sous vide (10), de telle sorte que la bague de support (2.4) de chaque préforme (2) vienne en appui sur les rails de guidage (13.1, 13.2).

2. Dispositif selon la revendication 1, **caractérisé en ce que** la bande de convoyage sous vide (10) comporte deux bandes (10.1, 10.2) s'écoulant à la parallèle l'une de l'autre, l'écart entre les bandes (10.1, 10.2) étant déterminé de telle sorte que l'embouchure (2.2) de chaque préforme (2) s'appuie partiellement sur l'une et partiellement sur l'autre des deux bandes (10.1, 10.2) dans le brin inférieur.

3. Dispositif selon la revendication 1 ou 2, **caractérisé en ce que** le dispositif de triage (9) comporte au moins deux dispositifs de désolidarisation (11.1, 11.2) activables indépendamment l'un de l'autre, qui sont placés dans différentes positions le long du trajet de transport de la bande de convoyage sous vide (10) .

4. Dispositif selon la revendication 3, **caractérisé en ce que** l'unité de traitement de données (8) est aménagée de sorte à générer des instructions de commande pour les plusieurs dispositifs de désolidarisation (11.1, 11.2) en fonction d'une évaluation de différents critères de vérification.

5. Dispositif selon l'une quelconque des revendications 1 à 4, **caractérisé en ce que** l'au moins une caméra numérique (7.1, 7.2) est orientée de telle sorte que l'embouchure (2.2) de chaque préforme (2) et/ou sa surface d'embouchure (2.1) arrive dans son champ de vision.

6. Dispositif selon l'une quelconque des revendications 1 à 5, **caractérisé en ce que** le convoyeur par pincement (4) et la bande de convoyage sous vide (10) transportent les préformes (2) à une vitesse concordante.

7. Dispositif selon l'une quelconque des revendications 1 à 6, **caractérisé en ce que** sur le convoyeur par pincement (4) est placé un système de suivi de la position (14), aménagé pour déterminer la position de chaque préforme (2) par rapport à chaque caméra numérique (7.1, 7.2) et à chaque système de désolidarisation (11.1, 11.2).

8. Dispositif selon la revendication 7, **caractérisé en ce que** le système de suivi de la position (14) comporte un capteur de déclenchement (14.1) destiné à un enregistrement déclenché de l'image d'une préforme (2) au moyen de l'au moins une caméra numérique (7.1, 7.2).

9. Dispositif selon la revendication 7, **caractérisé en ce que** le système de suivi de la position (14) comporte un capteur de course (14.2).

10. Dispositif selon l'une quelconque des revendications 1 à 9, **caractérisé en ce que** chaque dispositif de désolidarisation (11.1, 11.2) comporte une buse susceptible d'être exposée temporairement à un gaz, dont le jet de gaz est orienté à l'intérieur ou sur une préforme (2) qui doit être désolidarisée.

11. Dispositif selon l'une quelconque des revendications 1 à 10, **caractérisé en ce que** le dispositif de transport de sortie (12) comporte dans le tronçon de départ (12.1) des guidages qui se rejoignent dans la direction des rails de guidage (13.1, 13.2).
